# DEMANDE DE BREVET EUROPEEN

(11) **EP 1 239 647 A1**
(43) Date de publication de la demande: **11.09.2002**
(21) Numéro de dépôt: 02364012.1
(22) Date de dépôt: 08.03.2002
(51) Int. Cl.: H04L 29/06, H04L 12/28

(54) **Procédé et dispositifs de sécurisation d'une session de communication**

(30) Priorité: 09.03.2001 FR 0103281
(71) Demandeur: Cegetel Groupe, 75008 Paris (FR)
(72) Inventeur: Bouthors, Nicolas, 38240 Meylan (FR)
(74) Mandataire: Vidon, Patrice

(57) **Abrégé**

L'invention concerne un procédé de sécurisation d'une session de communication entre un appelant (100) et un terminal appelé (101), la session de communication comprenant une étape de transmission (401) de l'appelant vers le terminal appelé selon un mode de notification de page de données usager comprenant au moins une donnée additionnelle, de façon non sollicitée (mode « push »). Le procédé comprend une étape de sécurisation (402,403) s'appliquant à la (ou aux) donnée(s) additionnelle(s) selon au moins une règle déterminée pour éliminer ou inhiber la (ou les) données additionnelles.

L'invention concerne également les dispositifs mettant en oeuvre l'invention, notamment de type terminal ou élément de réseau.

## Description

La présente invention se rapporte au domaine des télécommunications.

Plus précisément, l'invention concerne la sécurisation d'une session de communication entre un appelant et des terminaux dans le cadre de transmission de données selon notamment un mode de notifications de données de façon non sollicitée, par exemple dans le cadre d'une transmission selon le protocole SIP, WAP ou pour la fourniture d'un service de type SMS.

Le SIP est l'acronyme de « Session Initiation Protocol » (ou « Protocole d'Initialisation de Session » en français), qui est une norme de l'IETF (ou « Internet Engineering Task Force » qui est un organisme chargé de l'élaboration des normes RFC ou « Request For Comments ») décrit dans le document référencé RFC 2543.

Le WAP est l'acronyme de « Wireless Application Protocol » (ou en français, « Protocole d'Application sans Fil » qui est un protocole permettant l'accès à Internet via des terminaux mobiles comprenant un écran de petite taille).

SIP est un protocole destiné à gérer (c'est-à-dire notamment à établir, modifier et mettre fin à) des sessions de communication entre une ou plusieurs parties.

Un protocole SIP permet, entre autres, une phase de négociation de session. Lors de l'établissement d'une session, un dialogue s'établit entre les terminaux utilisateurs afin de déterminer le meilleur mode de communication. La session dure ensuite pendant toute la connexion.

Plus précisément, selon le protocole SIP, un appelant envoie un message d'invitation, INVITE, à l'adresse du destinataire. A la réception de ce message, l'appelé peut accepter, refuser ou transférer la communication.

En cas d'acceptation, l'appelé renvoie un message de réponse positif stipulant le ou les médias à utiliser pour le joindre lors de cette session, avec les adresses et/ou les numéros correspondants.

De même, le service de type SMS (de l'anglais « Short Message Service » signifiant , en français, « Service de messages courts ») bien connu des réseaux GSM fonctionne en mode de notifications de données de façon non sollicitée (ou en anglais « push mode »). Jusqu'à présent, ce mode ne posait pas de problème du fait de la « fermeture » des terminaux. Il est cependant déjà utilisé pour envoyer des données non sollicitées affectant le terminal (par exemple pour l'envoi de sonneries, ou du logiciel Java destiné à la carte SIM).

Ces trois protocoles (WAP dans la version 1.2 et suivantes, SIP et protocole gérant le service SMS) utilisent généralement un mode « push » de page, qui permet la fourniture automatique par la source de données qui ne sont pas nécessairement demandées par le terminal. Ainsi, le mode « push » offre la possibilité d'envoi d'informations de façon non sollicitée à l'utilisateur. Cette méthode d'accès s'oppose à la méthode « pull » (utilisée généralement dans la toile ou « web » Internet) où c'est l'utilisateur qui demande la transmission de chaque élément d'information individuellement et de manière volontaire.

Selon l'état de l'art, ces données qui ne sont pas nécessairement demandées par le terminal peuvent contenir des éléments qui ne peuvent être pris en compte correctement pas le terminal appelé.

Selon l'état de l'art, le terminal (par exemple mobile) peut ne pas savoir gérer ces éléments.

Ainsi, par exemple, lorsqu'un terminal reçoit des commandes codées selon le langage java, si le terminal ne comprend pas ces commandes, le terminal et/ou le réseau peut alors avoir un comportement erratique et il est donc nécessaire de réinitialiser le terminal.

En outre, ces données peuvent mener à l'exécution dans le terminal d'opérations non désirées par l'utilisateur du terminal (telles que, par exemple, des opérations générées par un virus informatique faisant partie des données émises par l'appelant, ou l'affichage d'images qui prendrait trop de temps et/ou entraînerait une surconsommation de la batterie du terminal ou encore le stockage dans la mémoire du terminal d'informations non désirées (par exemple générées par « cookie »)).

Un inconvénient selon l'état de l'art est que la réception par un terminal de données qui ne sont pas nécessairement demandées par le terminal, peut avoir des effets de bords et altérer son bon fonctionnement. Ainsi, si par exemple, le terminal reçoit trop d'informations, il y a un risque de débordement de la mémoire logicielle (en anglais « overflow ») pouvant conduire à une panne (« crash ») du système.

Un autre inconvénient est que le fonctionnement du réseau auquel le terminal appelé est connecté peut lui aussi subir des effets de bords altérant un fonctionnement optimal.

Ainsi, par exemple, selon l'état de l'art, une page html contenant un script peut être envoyée à un terminal lors d'une requête SIP. Ce terminal peut à son tour envoyer une requête à un serveur quelconque du réseau, à l'insu de l'utilisateur. Dans le cas d'un terminal mobile, cette requête est « identifiée » par un numéro MSISDN inclus dans la requête WAP par exemple. Ce type de message peut être reçu par un serveur appartenant à l'opérateur, être validé et induire, par exemple, une modification du profil utilisateur.

De même, une requête SIP peut inclure une demande ou une annulation de rendez-vous. Si celle-ci est prise en compte automatiquement, l'agenda du téléphone peut se trouver modifié sans que l'utilisateur ne le souhaite.

L'invention selon ses différents aspects a notamment pour objectif d'éliminer ces inconvénients de l'art antérieur.

Plus précisément, un objectif de l'invention est de fournir une sécurisation d'une session de communication entre un appelant et un terminal appelé afin de limiter ou d'annuler les conséquences de l'émission vers un terminal d'éléments incompatibles avec celui-ci et/ou correspondant à des opérations non désirées.

Un autre objectif de l'invention est de rendre transparente pour l'utilisateur du terminal, l'émission vers ce terminal d'éléments incompatibles avec ledit terminal.

Un objectif de l'invention est également de mettre en oeuvre des procédés et/ou dispositifs de sécurisation dont la mise en oeuvre est relativement simple et économique.

Un autre objectif de l'invention est de prendre en compte les spécificités des messages contenant des données additionnelles reçues selon un mode de notification de données de façon non sollicitées ou mode « push » :
- notamment, un message reçu en mode « push » peut forcer à une prise de décision lors de la réception du message alors que l'usager peut ne pas être en mesure de décider. De plus, si le message inclut une information supplémentaire, celle-ci doit être prise en compte pour décider de la marche à suivre. On ne peut simplement l'ignorer. La page web peut, par exemple, contenir des informations nécessaires pour juger du degré d'urgence de la prise d'une communication ;
- en revanche, on note que dans un mode dit « pull » opposé au mode « push », on est déjà dans une forme de communication. On peut donc « prévoir » que la réponse à une requête va contenir tel ou tel type de données, voire demander à ce qu'elle ne contienne pas, par exemple, tel ou tel type de script potentiellement actif, ceci sans nuire à la nature de l'information, la source trouvera un autre moyen d'indiquer la nature de sa requête, de manière possible en échangeant quelques messages supplémentaires.

Ces objectifs ainsi que d'autres qui apparaîtront par la suite sont atteints selon l'invention , à l'aide d'un procédé de sécurisation d'une session de communication entre un appelant et un terminal appelé, la session de communication comprenant une étape de transmission de l'appelant vers le terminal appelé selon un mode de notification de page de données usager comprenant au moins une donnée additionnelle, de façon non sollicitée (mode « push ») remarquable en ce que le procédé comprend une étape de sécurisation s'appliquant à la (ou aux) donnée(s) additionnelle(s) selon au moins une règle déterminée pour éliminer ou inhiber la (ou les) donnée(s) additionnelle(s).

Ainsi, l'invention permet d'analyser les données reçues (en totalité ou en partie) par un terminal selon un mode « push » (ou « notification de données de façon non sollicitée») afin de détecter et permettre d'invalider des données additionnelles qui ne pourraient être traitées correctement par le terminal appelé.

Les données additionnelles sont notamment des données non nécessairement demandées par l'utilisateur du terminal appelé.

La règle déterminée peut notamment être une règle prédéterminée par exemple lors de la configuration du terminal appelé et/ou du réseau par lequel transitent les données ou une règle déterminée de manière dynamique par le réseau et/ou le terminal. Cette règle peut notamment spécifier le type de données additionnelles concernées ou non par l'étape de sécurisation et/ou le mécanisme de sécurisation à appliquer lors de l'étape de sécurisation.

Préférentiellement, l'étape de sécurisation est activée pour tous les messages pouvant comporter des données additionnelles qui peuvent devenir « actives » vis-à-vis du réseau ou du terminal, par suite de leur « transfert » à un programme, par suite de la « découverte » de leur inclusion dans un de ces messages, en particulier en fonction de leur « type », MIME par exemple.

On note que le mécanisme de sécurisation s'il est mis en place pour les messages initiaux, a vocation à être utilisé également pour les messages subséquents et donc à la fois pour le terminal appelant et le terminal appelé.

En outre, l'invention s'applique aussi bien aux terminaux fixes (par exemple, micro-ordinateurs, téléphone...) qu'aux terminaux mobiles.

Selon une caractéristique particulière, le procédé est remarquable en ce que l'étape de sécurisation comprend elle-même au moins une étape d'analyse du contenu d'au moins une partie des données usager, invalidant certaines des données additionnelles selon la (ou les) règle(s) déterminée(s).

Selon une caractéristique particulière, le procédé est remarquable en ce que l'étape d'analyse comprend elle-même une étape d'analyse syntaxique de la partie des données usager.

Ainsi, l'invention permet avantageusement de prendre en compte le contenu même des données additionnelles afin d'en déterminer notamment la nature et de vérifier qu'elles puissent être traitées correctement par le terminal appelé.

Selon une caractéristique particulière, le procédé est remarquable en ce que ladite étape de sécurisation comprend en outre au moins une étape de filtrage prenant en compte le résultat de l'étape d'analyse pour ne pas autoriser un traitement, par le terminal appelé, des données additionnelles invalidées lors de l'étape d'analyse.

Ainsi, l'invention empêche avantageusement la prise en compte par le terminal appelé de données invalidées par l'analyse, c'est-à-dire de données qui ne pourront pas être traitées correctement par le terminal appelé, celui-ci ne comprenant pas les applications nécessaires à leur traitement, et/ou ne possédant pas la puissance nécessaire pour le faire.

On note que le traitement des données s'entend ici pour toute application traitant et/ou prenant en compte des données additionnelles comme, par exemple, l'affichage des données additionnelles, l'exécution d'instructions liées à ces données (cas notamment lorsque les données sont de type script java insérées dans des pages de données), le stockage de ces données...

Selon une caractéristique particulière, le procédé est remarquable en ce que les données usager sont transmises selon un protocole de type SIP ou équivalent.

Selon une caractéristique particulière, le procédé est remarquable en ce que les données usager sont transmises selon un protocole de type WAP ou équivalent.

Ainsi, l'invention est avantageusement mise en oeuvre lorsque des protocoles SIP ,WAP ou équivalents sont utilisés.

L'invention s'applique notamment aux protocoles :
- utilisant le langage html (de l'anglais « HyperText Markup Language ») ou c-html (signifiant « compact-html» et qui est une version simplifiée du langage html développé par la société NTT Docomo (marque déposée) pour les téléphones portables de type i-mode) ;
- permettant les services de type SMS du GSM ou de tout autre réseau de communication mobile ;
- de type RTSP (de l'anglais « Real Time Streaming Protocole » qui est un protocole permettant de synchroniser et de contrôler un flux de paquets audio-vidéo entre un client et un serveur) ; et/ou
- de multiplexage et d'échanges de messages de type XML (« eXtensible Markup Language ») (par exemple le protocole BXXP ou BEEP signifiant en anglais « Blocs eXtensible eXchange Protocol » et qui est un protocole qui simplifie une communication sur internet et qui permet ainsi de communiquer plus facilement.).

D'une manière générale, l'invention s'applique à tous les protocoles où une requête asynchrone peut transporter des données utilisateurs potentiellement destinées à être passées à d'autres programmes pour être exploitées.

Selon une caractéristique particulière, le procédé est remarquable en ce qu'il comprend en outre une étape de transmission d'au moins une information de contexte de l'appelant vers le terminal appelé de façon à optimiser l'étape de sécurisation.

Ainsi, la source notamment peut avantageusement transmettre avec les messages, des informations de contexte et des paramètres associés pour optimiser l'étape de sécurisation, par exemple, en la facilitant et/ou la rendant plus performante et plus fiable.

La (ou les) information(s) de contexte peut (ou peuvent) notamment appartenir au groupe comprenant:
- des types des données additionnelles (qui peuvent, par exemple, stipuler que les données additionnelles représentent des images, de l'audio ou des documents sous forme de texte);
- des paramètres de données usager transmises (qui peuvent notamment comprendre la liste et le nombre de données usager transmises);
- des types d'applications pouvant traiter (les types d'application sont alors, par exemple, des noms ou des types de programmes adaptés à traiter les données (notamment programme de traitement de texte, tableur, programme de visualisation d'images...)) et/ou prendre en compte les données additionnelles (qui, dans ce cas, servent, par exemple, à paramétrer les applications);
- des types de terminaux compatibles avec les données additionnelles; et
- des types de terminaux incompatibles avec les données additionnelles.

Selon une caractéristique particulière, le procédé est remarquable en ce que la ou les règles déterminées comprennent une prise en compte d'informations de profil associées au terminal lors de la mise en oeuvre du mécanisme de sécurisation.

Ainsi, un profil associé au terminal peut préférentiellement être pris en compte ce qui facilitera et/ou rendra plus pertinente la sécurisation vis-à-vis du terminal et/ou de son utilisateur (qui peut définir ses préférences, c'est-à-dire notamment ce qu'il autorise ou n'autorise pas).

Les informations de profil peuvent notamment appartenir au groupe comprenant:
- des types de données acceptées par le terminal appelé;
- des types de données non acceptées par le terminal appelé;
- des paramètres de données additionnelles (par exemple, un horodate de transmission de messages, une identification d'appelant et/ou une nature de requête liée au message);
- des types d'applications pouvant être exécutées sur le terminal appelé;
- des types d'applications ne pouvant pas être exécutées sur le terminal appelé; et
- des préférences de l'utilisateur du terminal appelé.

Selon une caractéristique particulière, le procédé est remarquable en ce que le terminal met en oeuvre au moins en partie l'étape de sécurisation.

Ainsi, le terminal peut avantageusement mettre en oeuvre en partie ou totalement l'étape de sécurisation appliquée à toutes les données additionnelles entrantes, quelle que soit l'origine de ces données. Cette étape de sécurisation lorsqu'elle est mise en oeuvre au moins en partie par le terminal, peut se faire de manière transparente ou non pour le réseau auquel est connecté le terminal.

Selon une caractéristique particulière, le procédé est remarquable en ce qu'au moins un élément d'architecture de réseau met en oeuvre l'étape de sécurisation.

Un élément d'architecture de réseau peut avantageusement mettre en oeuvre en partie ou totalement l'étape de sécurisation appliquée à toutes les données additionnelles entrantes et effectuer l'étape d'analyse et/ou de filtrage. Cet élément d'architecture de réseau peut notamment être un « proxy » (c'est-à-dire notamment un programme, une fonction ou un serveur qui agit en tant qu'intermédiaire dans un échange d'information en effectuant une opération de contrôle) ou un pare-feu (ou en anglais « firewall », c'est-à-dire un dispositif matériel et/ou logiciel qui contrôle un accès sur un réseau) qui sont bien adaptés à ces tâches, notamment d'analyse syntaxique.

Ainsi, un élément de réseau effectuant ces étapes permet de décharger le terminal appelé tout en ayant des méthodes d'analyse et/ou de filtrage pouvant évoluer facilement avec le type de données pouvant être transmises par l'appelant à destination du terminal appelé.

Si l'étape de filtrage est effectuée par un élément de réseau, le nombre de données additionnelles peut être réduit et ainsi, l'invention permet avantageusement de réduire l'occupation de la bande passante utilisée pour le transfert entre l'élément de réseau filtrant et le terminal, la bande passante étant une ressource à économiser notamment sur les liaisons sans fil (typiquement radio) dans les réseaux mobiles.

On note que l'étape de sécurisation peut notamment être mise en oeuvre :
- totalement par le terminal appelé ;
- totalement par un ou plusieurs éléments d'architecture de réseau ; ou
- partiellement par un ou plusieurs éléments d'architecture de réseau et par le terminal appelé.

Dans ce dernier cas, on note également que dans l'étape de sécurisation, des étapes d'analyse et/ou de filtrage peuvent être effectuées de manière partagée entre un ou plusieurs éléments d'architecture de réseau et le terminal appelé (l'étape d'analyse peut, par exemple, être effectuée par un « proxy » par lequel transitent les données additionnelles entre l'appelant et le terminal appelé, alors que l'étape de filtrage elle-même est réalisée par le terminal appelé.).

L'invention concerne également un terminal (mobile ou fixe) ainsi qu'un élément de réseau mettant en oeuvre le procédé décrit précédemment.

L'invention concerne, en outre, un dispositif appelant comprenant :
- des moyens de transmission du dispositif appelant vers au moins un terminal appelé selon un mode poussée de page de données usager comprenant au moins une donnée additionnelle ; et
- des moyens de transmission d'informations de contexte optimisant une étape de sécurisation s'appliquant aux données additionnelles selon au moins une règle déterminée.

On note qu'ici un dispositif appelant peut être notamment un terminal appelant et/ou un serveur appelant.

De plus, l'invention concerne un programme d'ordinateur et un produit programme d'ordinateur enregistré sur un support utilisable dans un ordinateur permettant la mise en oeuvre du procédé décrit selon l'invention.

Les caractéristiques particulières et les avantages des dispositifs de type terminal appelé, élément de réseau et appelant, du programme d'ordinateur et du produit programme d'ordinateur enregistré sur un support utilisable dans un ordinateur étant similaires à ceux du procédé, ils ne sont pas rappelés ici.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un réseau comprenant un terminal, conforme à l'invention selon un mode particulier de réalisation ;
- la figure 2 illustre un message de données transmis par l'élément « source » de la figure 1 ;
- la figure 3 illustre un message de données après filtrage par l'élément « destinataire » et/ou « réseau » de la figure 1 ;
- la figure 4 présente un protocole de communication entre les différents éléments illustrés en regard de la figure 1 ;
- la figure 5 présente une première variante du protocole de communication entre les différents éléments illustrés en regard de la figure 1 ;
- la figure 6 présente une seconde variante du protocole de communication entre les différents éléments illustrés en regard de la figure 1.

Le principe général de l'invention repose sur l'utilisation d'un mécanisme de contrôle d'accès au sein d'un terminal appelé et/ou du réseau auquel est connecté le terminal.

Ainsi, selon l'invention, le terminal et/ou le réseau auquel il est connecté effectue :
- une vérification syntaxique des données qui sont émises vers le terminal ; et
- un filtrage de ces données pour ne laisser passer que des données « passives », ou pour enlever des données incompatibles avec le terminal, notamment des appels à des scripts (c'est-à-dire des listes de commandes pour l'exécution d'une tâche).

Ainsi, si un protocole SIP est utilisé, l'application logicielle recevant les paquets SIP, ou en d'autres termes l'agent SIP, va lire les paquets SIP et vérifier le contenu de la partie « Données Utilisateur ».

Le format inclus dans la partie « Données Utilisateur » peut être déterminé s'il est sous la forme MIME. L'application correspondante au type de données transportées est déclenchée et l'information correspondante lui est passée.

Ainsi, une page web sera affichée par un navigateur et un fichier de type voix sera lu. De même, une demande de rendez-vous sera passée à un agenda.

Ces informations peuvent être consultées par l'utilisateur ou être traitées dynamiquement. L'agent SIP doit ensuite fournir une réponse à un message de requête initial, par exemple en fonction des choix de l'utilisateur du terminal.

Selon l'invention, avant le passage du message à une application ou à une entité logicielle chargée de le traiter, le message est soumis à un module de contrôle et de filtrage qui effectue les étapes suivantes :
- vérification et validation que le type de données contenues dans le message est compris et est acceptable par le terminal ;
- interprétation fine de la nature de la requête transportée pour autoriser son traitement ; et
- filtrage de la requête pour accepter ou refuser certaines données telles, par exemple, du code sous forme de macros ou de script inclus dans la requête transportée.

On note qu'une validation correspond ici à un type de vérification où le programme recevant la requête (ou un programme adjoint auquel cette tâche est déléguée) va regarder les types de données transportés et effectuer un premier traitement sans aller regarder « à l'intérieur » de ces différents éléments. Typiquement, on peut, par exemple, refuser toutes les pages Web, soit en les filtrant, soit en générant une réponse négative indiquant un refus du fait de la détection de ce type d'information dans la requête initiale.

L'interprétation fine, va au delà interpréter les messages inclus et décider d'une marche à suivre en fonction de leur contenu (par exemple, on accepte une demande de réunion si elle provient d'une personne déterminée, on accepte un page web si elle ne contient pas de scripts, etc...)

Ces traitements peuvent, en outre, être réalisés en fonction de paramètres du paquet SIP tel qu'un horodate, une identification d'appelant et/ou une nature de requête SIP.

Selon l'invention, on dispose donc d'un mécanisme générique permettant lors de l'établissement d'une session de communication de procéder aux vérifications requises (compte-tenu par exemple des préférences de l'utilisateur) pour valider ou inhiber l'action attendue.

Selon une variante de l'invention,
- l'application destinataire (appelé) apporte un profil spécifiant des types de vérification et de filtre ; et
- l'application source (appelant) décrit un contexte et des paramètres associés.

Une matrice décrivant les informations de profil et de contexte décrit alors l'enchaînement des traitements à effectuer. Cette matrice peut être configurée pour tenir compte des préférences de l'utilisateur.

Au cours de l'analyse syntaxique, des vérifications supplémentaires notamment de type détection de virus informatique peuvent être effectuées.

Selon une autre variante, lorsqu'un ou des éléments de l'architecture du réseau (par exemple des « firewalls » ou des « proxy ») effectuent les différentes étapes (notamment interprétation, validation et filtrage) correspondant à l'invention, une étape complémentaire de modification des messages destinés à un terminal peut être effectuée.

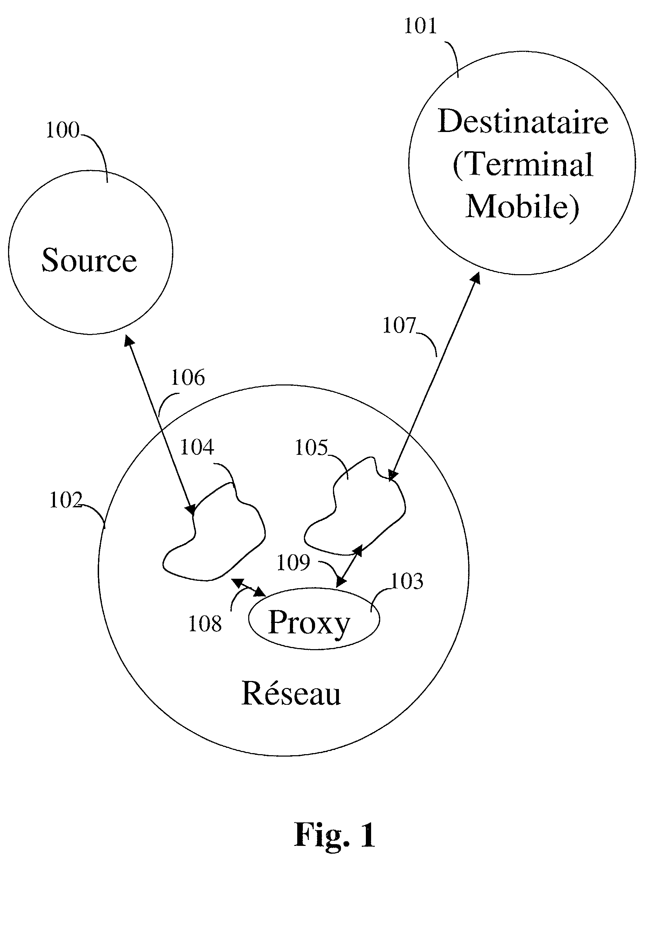

On présente, en relation avec la figure 1, une infrastructure de réseau de télécommunication permettant la mise en oeuvre de l'invention.

Cette infrastructure comprend notamment :
- une source 100 ou appelant ;
- un destinataire 101 ou appelé; et
- un réseau 102.

Le réseau 102 comprend lui-même notamment :
- un « proxy » 103 ; et
- des éléments d'architecture de réseau 104 et 105.

La source 100 est typiquement un serveur de données, par exemple de fournisseur de service ou d'opérateur.

Le destinataire 101 est un terminal quelconque mobile (par exemple un radiotéléphone, un terminal WAP, un terminal GSM (Global System for Mobile communication), ou un terminal mobile de troisième génération tel par exemple un terminal UMTS (ou « Universal Mobile Telecommunication System »)) ou fixe (par exemple de type micro-ordinateur). Il peut posséder plusieurs fonctionnalités multimédia (diffusion d'images, de voix, ...) mais n'est pas à même de traiter tout type de données transmises habituellement à des terminaux fixes, tel que, par exemple, des scripts ou du code Java.

Le réseau 102 est un réseau quelconque permettant le transfert de données de la source 100 vers le destinataire 101.

Les liaisons 106, 108 et 109 reliant respectivement la source 100 au réseau 102 et différents éléments du réseau entre eux sont des liaisons de communications quelconques notamment des liaisons faisant partie d'un réseau téléphonique commuté (RTC), des liaisons de type Internet et/ou des liaisons appartenant à un réseau de radiocommunications (par exemple selon la norme GSM, ou autre).

La liaison 107 reliant le destinataire 101 au réseau 102 est, par exemple, une liaison sans fil par exemple de type appartenant à un réseau GSM ou mobile de troisième génération.

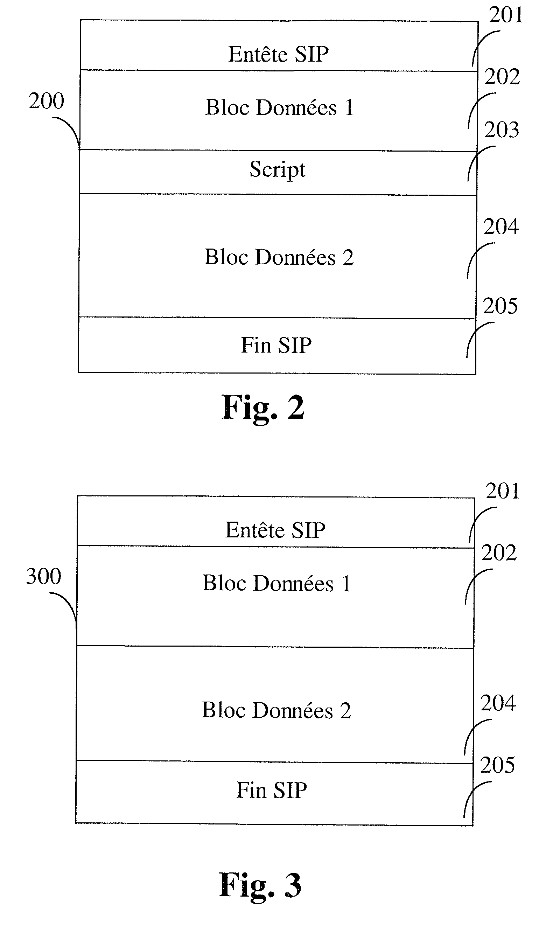

La figure 2 présente un message 200 de données transmis par la source 100 telle qu'illustrée en regard de la figure 1.

Ce message 200 est un message tout à fait quelconque tel qu'il peut être émis par un serveur et comprend notamment :
- un entête 201 compatible avec le protocole SIP ;
- des données utilisateurs comprenant elles-mêmes :
   - un premier bloc de données 202 ;
   - un script java 203 ; et
   - un deuxième bloc de données 204 ; puis
- un bloc de fin 205 compatible avec le protocole SIP.

On note que les premier et deuxième blocs de données 202 et 204 contiennent uniquement des données compatibles avec le destinataire 101.

En revanche, le script 203 constitue un bloc de données additionnelles destinées normalement à un terminal plus puissant que le terminal 101. Le script 203 ne peut notamment pas être exécuté par celui-ci.

Le message 200 contient donc des données additionnelles dont certaines sont incompatibles avec le destinataire 101.

La figure 3 présente un message 300 de données transmis par la source 100 obtenu à partir du message 200 tel qu'illustré en regard de la figure 2 mais filtré.

Ce message 300 comprend tous les éléments compatibles avec le destinataire 101 et seulement ceux-ci c'est-à-dire notamment :
- un entête 201 compatible avec le protocole SIP ;
- des données utilisateurs comprenant elles-mêmes :
   - un premier bloc de données 202 ;et
   - un deuxième bloc de données 204 ; puis
- un bloc de fin 205 compatible avec le protocole SIP.

On note en particulier que le script 203 qui est incompatible avec le destinataire 101 a été filtré et n'est plus présent dans le message 300.

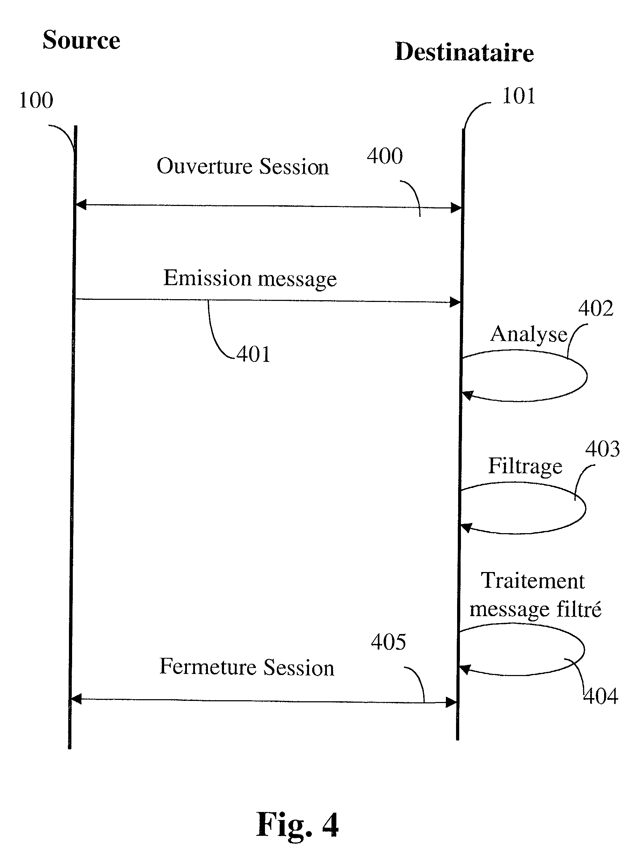

La figure 4 illustre schématiquement un protocole de communication entre les différents éléments illustrés en regard de la figure 1 .

Au cours d'une première étape 400, une session SIP est ouverte entre la source 100 et le destinataire 101.

Puis, au cours d'une étape 401, la source 100 émet vers le destinataire 101 un message 200 tel qu'illustré en regard de la figure 2.

Ensuite, au cours d'une étape d'analyse syntaxique 402, le destinataire 101 effectue les étapes suivantes :
- vérification et validation que les données transmises dans le message ne contiennent que des données comprises et acceptables par le destinataire 101 ; et
- interprétation plus fine de la nature de la ou des requêtes contenues dans le message 200 pour autoriser leur traitement.

Au cours de cette étape, le destinataire 101 va effectivement après vérification valider les blocs de données 202 et 204. En revanche, comme le destinataire 101 ne peut exécuter de script java, le script 203 est invalidé.

Ensuite, au cours d'une étape 403 de filtrage, le destinataire 101 filtre le message 200 en ne conservant que les données validées lors de l'étape précédente (ici les blocs de données 202 et 204) et en éliminant les données invalidées (le script 203 selon l'exemple).

Le message 200 est ainsi transformé en un message 300 tel qu'illustré en regard de la figure 3.

Puis, au cours d'une étape 404 de traitement, le message filtré 300 est traité par une ou plusieurs applications disponibles sur le terminal 101.

Ensuite, au cours d'une étape 405, la session SIP est fermée.

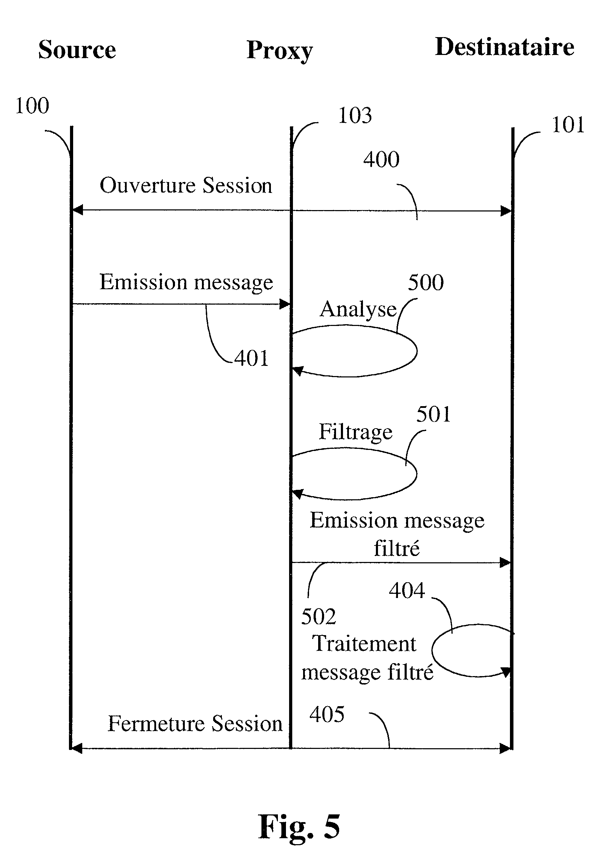

La figure 5 présente une première variante du protocole de communication entre les différents éléments illustrés en regard de la figure 1 .

Au cours d'une première étape 400, une session SIP est ouverte entre la source 100 et le destinataire 101.

Ensuite, au cours d'une étape 401, la source 100 émet vers le destinataire 101 un message 200 tel qu'illustré en regard de la figure 2, aboutissant au « proxy » 103.

Enfin, au cours d'une étape d'analyse syntaxique 500 tout à fait similaire à l'étape 402 précédemment décrite, le « proxy » effectue les étapes suivantes :
- validation que les données comprises dans le message ne contient que des données comprises et acceptables par le destinataire 101 ; et
- interprétation plus fine de la nature de la ou des requêtes contenues dans le message 200 pour autoriser leur traitement.

En effet, un « proxy » peut contenir des informations de configuration génériques, fonction du « profil client » ou spécifiques par client. Ces informations de configuration peuvent inclure les règles de validation et d'interprétation fine qu'il s'agit d'effectuer pour le compte du client.

Au cours de cette étape, le « proxy » 103 va effectivement valider les blocs de données 202 et 204. En revanche, comme le destinataire 101 ne peut exécuter de script java, le script 203 est invalidé.

Ensuite, au cours d'une étape 501 de filtrage identique à l'étape 403 de filtrage, le « proxy» 103 filtre le message 200 en ne conservant que les données validées lors de l'étape précédente (ici les blocs de données 202 et 204) et en éliminant les données invalidées (c'est-à-dire le script 203).

Le message 200 est ainsi transformé en un message 300 tel qu'illustré en regard de la figure 3.

Puis, au cours d'une étape 502, le « proxy » 103 émet vers le destinataire 101 le message 300 filtré.

Puis, au cours d'une étape 404 de traitement, le message filtré 300 est traité de manière transparente par une ou plusieurs applications disponibles sur le terminal 101.

Ensuite, au cours d'une étape 405, la session SIP est fermée.

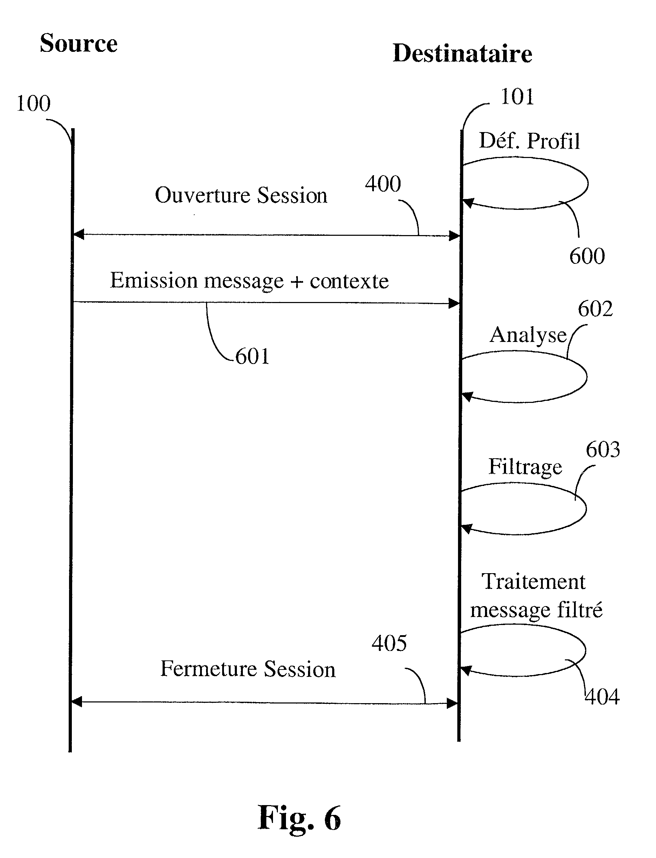

La figure 6 présente une seconde variante du protocole de communication entre les différents éléments illustrés en regard de la figure 1.

Selon cette variante, au cours d'une étape 600, le terminal destinataire 101 établit un profil.

Ce profil comprend notamment au moins l'un des éléments suivants :
- type de terminal ;
- applications supportées par le terminal ;
- type de données pouvant être supportées par les applications disponibles sur le terminal (par exemple, données images pouvant être visualisées, ou audio pouvant être restituées...); et
- préférences de l'utilisateur du terminal 101 telles que par exemple les types de données qu'il désire et/ou accepte sur le terminal 101.

Ici, par exemple, le profil pourra indiquer que les données de type image et audio sont acceptées par le terminal alors que les scripts java ne sont pas supportés ou sont refusés par l'utilisateur.

Le profil précise, en outre, les règles de validation et celles d'interprétation fine spécifiquement.

Au cours d'une première étape 400, une session SIP est ouverte entre la source 100 et le destinataire 101.

Puis, au cours d'une étape 601, la source 100 émet vers le destinataire 101 :
- un message 200 tel qu'illustré en regard de la figure 2 ; et
- un contexte relatif aux données transportées par le message (par exemple type de données, application nécessaires à une exploitation correcte de ces données par un terminal, type de terminal pouvant accepter ces données...). Ici, le contexte pourra indiquer un message contenant des données de type image, un script et des données de type audio.

Ensuite, au cours d'une étape d'analyse syntaxique 602 le terminal 101 effectue les étapes suivantes :
- vérification et validation que les données transmises dans le message ne contiennent que des données comprises et acceptables par le destinataire 101 ; et
- interprétation plus fine de la nature de la ou des requêtes contenues dans le message 200 pour autoriser leur traitement en fonction du contexte transmis par la source 100 et du profil du terminal.

Le contexte ici comprend à titre d'exemple des informations indiquant :
- des données de type image et audio acceptées par le profil du terminal 101 ; et
- un script java refusé par le profil du terminal 101.

Ainsi, au cours de l'étape 602, le terminal 101 autorise les données de type image et audio, celles-ci étant identifiées par le contexte transmis par la source 100 et autorisées par le profil du terminal 101 alors qu'il refuse le script java.

Puis au cours d'une étape 603, le terminal 101 filtre le contenu du message transmis par la source 100 en fonction du résultat de l'étape 602.

Ainsi, le terminal 101 filtre le message 200 en ne conservant que les données validées lors de l'étape précédente (ici les blocs de données 202 et 204) et en éliminant les données non validées (c'est-à-dire le script 203).

Le message 200 est ainsi transformé en un message 300 tel qu'illustré en regard de la figure 3.

Puis, au cours d'une étape 404 de traitement telle qu'illustrée en regard de la figure 4, le message filtré 300 est traité de manière transparente par une ou plusieurs applications disponibles sur le terminal 101.

Ensuite, au cours d'une étape 405, la session SIP est fermée.

Bien entendu, l'invention n'est pas limitée aux exemples de réalisation mentionnés ci-dessus.

En particulier, l'homme du métier pourra apporter toute variante dans la définition du contexte associé au message lors de sa transmission et dans le profil du terminal.

On note que le procédé s'étend à tout type d'architecture de réseau et que non seulement un élément intermédiaire de type « proxy » peut effectuer des étapes d'analyse syntaxique et/ou de filtrage mais que tout élément de réseau par lequel transitent des messages à destination d'un terminal pourraient être utilisé à cette tâche.

On note également que l'invention n'est pas limitée à la transmission de données via un protocole SIP mais s'étend à tout type de protocole fonctionnant en mode « push » ou mode de notifications de données de façon non sollicitée, notamment au protocole WAP.

On note aussi que l'invention s'applique au cas où la communication fait intervenir plusieurs appelants et/ou plusieurs appelés.

On note, en outre, qu'une session peut « contenir » une personne, deux ou plus. C'est le cas, notamment, des jeux en ligne où de nombreuses personnes participent à une même partie. Il faut considérer que le jeu est alors « couvert » par une session de communication englobant tous les participants. Terminer la session conduira à l'arrêt du jeu ; dans ce cas, la « communication » correspond alors à l'ensemble des messages échangés dans le cadre du jeu.

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé de sécurisation d'une session de communication entre un appelant (100) et un terminal appelé (101), ladite session de communication comprenant une étape de transmission (401, 601) dudit appelant vers ledit terminal appelé selon un mode de notification de page de données usager comprenant au moins une donnée additionnelle, de façon non sollicitée (mode « push »)
**caractérisé en ce que** ledit procédé comprend une étape de sécurisation (402, 403, 500, 501, 602, 603) s'appliquant à ladite au moins une donnée additionnelle selon au moins une règle déterminée pour éliminer ou inhiber ladite au moins une donnée additionnelle.

2. Procédé selon la revendication 1, **caractérisé en ce que** ladite étape de sécurisation comprend elle-même au moins une étape d'analyse (402, 500, 602) du contenu d'au moins une partie desdites données usager, invalidant certaines desdites données additionnelles selon ladite au moins une règle déterminée.

3. Procédé selon la revendication 2, **caractérisé en ce que** ladite étape d'analyse comprend elle-même une étape d'analyse syntaxique de ladite partie desdites données usager.

4. Procédé selon l'une quelconque des revendications 2 et 3, **caractérisé en ce que** ladite étape de sécurisation comprend en outre au moins une étape de filtrage (403, 501, 603) prenant en compte le résultat de ladite étape d'analyse pour ne pas autoriser un traitement, par ledit terminal appelé, des données additionnelles invalidées lors de ladite étape d'analyse.

5. Procédé selon l'une quelconque des revendications 1 à 4, **caractérisé en ce que** lesdites données usager sont transmises selon un protocole de type SIP ou équivalent.

6. Procédé selon l'une quelconque des revendications 1 à 5, **caractérisé en ce que** lesdites données usager sont transmises selon un protocole de type WAP ou équivalent.

7. Procédé selon l'une quelconque des revendications 1 à 6, **caractérisé en ce qu'**il comprend en outre une étape de transmission (601) d'au moins une information de contexte dudit appelant vers ledit terminal appelé de façon à optimiser ladite étape de sécurisation.

8. Procédé selon l'une quelconque des revendications 1 à 7, **caractérisé en ce que** ladite au moins une règle déterminée comprend une prise en compte d'informations de profil (600) associées audit terminal lors de la mise en oeuvre dudit mécanisme de sécurisation.

9. Procédé selon l'une quelconque des revendications 1 à 8, **caractérisé en ce que** ledit terminal met en oeuvre au moins en partie ladite étape de sécurisation (402, 403, 602, 603).

10. Procédé selon l'une quelconque des revendications 1 à 9, **caractérisé en ce qu'**au moins un élément d'architecture de réseau met en oeuvre ladite étape de sécurisation (500, 501).
